# EUROPÄISCHE PATENTSCHRIFT

(11) **EP 3 008 799 B1**
(45) Veröffentlichungstag und Bekanntmachung des Hinweises auf die Patenterteilung: **27.02.2019**
(21) Anmeldenummer: 14723806.7
(22) Anmeldetag: 14.05.2014
(51) Int. Cl.: H02K 17/18

(54) **KURZSCHLUSSRING FÜR EINE ELEKTRISCHE ASYNCHRONMASCHINE ZUSAMMENGESETZT AUS TEILKREISBOGEN-FÖRMIGEN SEGMENTEN**
SHORT-CIRCUIT RING FOR AN ELECTRICAL ASYNCHRONOUS MACHINE, COMPOSED OF PARTIAL RING SEGMENTS
ANNEAU DE COURT-CIRCUIT POUR MACHINE ÉLECTRIQUE ASYNCHRONE COMPOSÉ DE SEGMENTS EN PORTIONS D'ARC DE CERCLE

(30) Priorität: 13.06.2013 DE 102013211040
(43) Veröffentlichungstag der Anmeldung: 20.04.2016
(73) Patentinhaber: Robert Bosch GmbH, 70442 Stuttgart (DE)
(72) Erfinder: LAUE, Harald, 73733 Esslingen (DE); KELLETER, Arndt, 71636 Ludwigsburg (DE); BERGER, Thomas, 71254 Ditzingen (DE)
(86) Internationale Anmeldenummer: PCT/EP2014/059823
(87) Internationale Veröffentlichungsnummer: WO 2014/198477

(56) Entgegenhaltungen:
- EP-A2- 2 597 762
- JP-A- 2004 236 456
- RO-B- 112 325
- US-A- 5 068 560
- US-A- 5 729 885
- US-A1- 2007 284 953
- US-A1- 2013 020 899

## Beschreibung

### Gebiet der Erfindung

Die vorliegende Erfindung betrifft elektrische Asynchronmaschinen und insbesondere einen Kurzschlussring für eine elektrische Asynchronmaschine.

### Stand der Technik

Elektrische Asynchronmaschinen werden insbesondere aufgrund ihrer Robustheit und Zuverlässigkeit für eine Vielzahl industrieller Anwendungen eingesetzt. Derzeit werden insbesondere elektrische Asynchronmaschinen, die einen sogenannten Kurzschlusskäfig an ihrem Rotor aufweisen, für einen Einsatz bei Elektro- oder Hybridfahrzeugen weiterentwickelt, da bei solchen Asynchronmaschinen im Gegensatz zu Synchronmaschinen keine Magnete im Rotor eingesetzt werden brauchen und somit auf hierfür verwendbare, sehr teure Seltene-Erden-Permanentmagnete verzichtet werden kann.

Bei einer elektrischen Asynchronmaschine werden während des Betriebs in einem an einem Rotor vorgesehenen Kurzschlusskäfig hohe elektrische Ströme induziert, aufgrund derer starke Magnetfelder zwischen dem Rotor und einem Stator generiert werden können, die dann zu auf den Rotor wirkenden Drehmomenten führen können. Hierbei sollten einerseits elektrische Widerstände innerhalb des Kurzschlusskäfigs möglichst gering gehalten werden, um Verluste bei dem im Kurzschlusskäfig induzierten Strom zu miniminieren. Andererseits sollte der Kurzschlusskäfig mechanisch stabil sein, um den während des Betriebs der Asynchronmaschine auftretenden hohen mechanischen Belastungen, insbesondere den hohen auftretenden Fliehkräften, gewachsen zu sein.

Ein Kurzschlusskäfig einer Asynchronmaschine besteht im Allgemeinen aus einer Vielzahl von sich in axialer Richtung der Asynchronmaschine erstreckenden Stäben und wenigstens zwei Kurzschlussringen, die die Stäbe jeweils an ihren Enden elektrisch und mechanisch miteinander verbinden. Stäbe und Kurzschlussringe bestehen dabei vorzugsweise aus einem gut elektrisch leitfähigen Material, insbesondere einem Metall wie zum Beispiel Kupfer oder Aluminium oder Legierungen derselben.

In der DE 199 19 899 C1 ist ein Kurzschlusskäfig für eine elektrische Asynchronmaschine gezeigt. In der DE 10 2005 030 798 A1 ist eine alternative Ausgestaltung eines Läufers einer Asynchronmaschine beschrieben.

Kurzschlusskäfige von Rotoren einer Asynchronmaschine für Kraftfahrzeuge werden heutzutage häufig mittels Gießverfahren hergestellt. Dabei können Kurzschlussringe und Stäbe direkt um ein in ein Werkzeug eingelegtes Lamellenpaket des Rotors gespritzt werden, so dass ein homogener Verbund aus beispielsweise reinem Kupfer mit sehr guten elektrischen Leiteigenschaften entstehen kann.

Alternativ kann ein Kurzschlusskäfig aus separat gefertigten Stäben und Kurzschlussringen zusammengesetzt werden. Die Stäbe können dabei in geeignet ausgebildete Nuten von den Rotor bildenden Lamellenpaketen eingeführt werden und dann an ihren Enden mittels Kurzschlussringen verbunden werden. Die Kurzschlussringe weisen hierbei ebenfalls geeignet ausgebildete Ausnehmungen beispielsweise in Form von Nuten auf, in die die Stäbe eingeführt werden können. Derart montierte Stäbe können dann mit dem Kurzschlussring nach dem Fügen beispielsweise mittels Lot, mechanischer Verformung oder Laserschweißen verbunden werden.

Bei aus Stäben und Kurzschlussringen zusammengesetzten Kurzschlusskäfigen werden die Kurzschlussringe bisher meist einstückig hergestellt oder aus einer Mehrzahl von ringförmigen Blechen zusammengesetzt. Die Kurzschlussringe können dabei entweder gegossen und nachträglich bearbeitet werden oder mechanisch aus Halbzeugen hergestellt werden. Auch Laserschneidverfahren und Wasserstrahlschneidverfahren sind zur Anwendung gekommen.

Je größer jedoch der Durchmesser eines mit einem Kurzschlusskäfig zu versehenen Rotors einer Asynchronmaschine ist, umso aufwendiger ist in der Regel die Herstellung der Kurzschlussringe. Beispielsweise sind für eine Vollronde für einen Kurzschlussring mit einem Durchmesser von über 300 mm bis zu 100 Nuten zur Aufnahme von Stäben des Kurzschlusskäfigs in dem Kurzschlussring vorzusehen. Ein Gießen von Kurzschlussringen derart großen Durchmessers mit vielen Nuten, insbesondere aus elektrisch sehr gut leitfähigem Kupfer, ist derzeit nicht möglich oder erfordert zumindest erheblichen technischen Aufwand.

US 5,729,885 B offenbart eine Asynchronmaschine mit einem Kurzschlussring, der aus Teilkreisbogen-förmigen Segmenten zusammengesetzt ist, wobei die Teilkreisbogen-förmigen Segmente in Umfangsrichtung gesehen ausschließlich zwischen zwei Stäben vorgesehen sind. Die Ausnehmungen zur Aufnahme der Stäbe sind an den Fügeseiten vorgesehen und bilden jeweils eine Nut einer Nut-Feder-Verbindung zwischen den Stäben und den Teilkreisbogen-förmigen Segmenten.
JP 2004 236 456 A offenbart einen Kurzschlussring 65.66 mit Öffnungen 67a zur Aufnahme der Stäbe 63 und mit Vertiefungen 67 zur Aufnahme von Teilkreisbogen-förmigen Segmenten 64a. Kurzschlussringe sind darüber hinaus auch in der US 2013/0020899 A1. US 2007/0284953 A1. EP 2 597 762 A2. US 5,068,560 A und RO 112 325 B offenbart.

### Offenbarung der Erfindung

Ausführungsformen der vorliegenden Erfindung erlauben in vorteilhafter Weise eine Bereitstellung eines Kurzschlussrings für eine elektrische Asynchronmaschine derart, dass sich der Kurzschlussring einfach und kostengünstig herstellen lässt. Der Kurzschlussring kann dabei sowohl sehr geringe elektrische Widerstandsverluste ermöglichen als auch den beispielsweise in hochdrehenden Asynchronmaschinen auftretenden mechanischen Belastungen gewachsen sein.

Gemäß einem Aspekt der vorliegenden Erfindung wird ein Kurzschlussring für eine elektrische Asynchronmaschine gemäß Anspruch 1 definiert. Der Kurzschlussring ist kreisförmig und weist entlang seines Umfangs eine Vielzahl von sich in axialer Richtung erstreckenden Ausnehmungen auf, in die Stäbe eines Rotorkäfigs der Asynchronmaschine eingebracht werden können. Der Kurzschlussring zeichnet sich dadurch aus, dass er aus mehreren Teilkreisbogen-förmigen Segmenten zusammengesetzt ist.

Eine dem vorgeschlagenen Kurzschlussring zugrunde liegende Idee kann unter anderem darin gesehen werden, den Kurzschlussring nicht mehr wie herkömmlich als einzelnes ringförmig geschlossenes Element bereitzustellen, sondern ihn stattdessen aus mehreren Segmenten zusammenzusetzen. Jedes der Segmente soll dabei Teilkreisbogen-förmig sein, das heißt, einen Teil eines Kreis-förmigen Rings bilden, so dass mehrere solcher Segmente im zusammengesetzten Zustand den gesamten Kurzschlussring bilden können. Jedes einzelne der Segmente kann dabei beispielsweise eine Ausnehmung oder einige wenige Ausnehmungen, zum Beispiel bis zu zehn Ausnehmungen, in Form von Nuten aufweisen, in die Stäbe eines Rotorkäfigs der Asynchronmaschine eingebracht werden können. Der aus den mehreren Segmenten zusammengesetzte Kurzschlussring kann dann die Summe der Ausnehmungen der Segmente aufweisen, beispielsweise 100 oder mehr Ausnehmungen.

Dadurch, dass der Kurzschlussring nicht als einzelnes ringförmiges Teil bereitgestellt wird bzw. aus mehreren ringförmigen Teilen zusammengesetzt wird, sondern sich aus mehreren Teilkreisbogen-förmigen Segmenten zusammensetzen lässt, können, wie nachfolgend dargelegt, eine Vielzahl von Vorteilen erreicht werden.

In einer nicht erfindungsgemäßen Ausführungsform können die Teilkreisbogen-förmigen Segmente stranggepresst werden.

Unter Strangpressen wird dabei ein Umformverfahren verstanden, welches zu den Druckumformverfahren zählt, und mithilfe dessen insbesondere auch unregelmäßig geformte prismatische Profile hergestellt werden können. Dabei wird ein sogenannter Pressling, der zuvor gegebenenfalls auf eine Umformtemperatur gebracht wurde, mithilfe eines Stempels durch eine Matrize gedrückt, so dass die äußere Form des Pressstrangs durch die Matrize bestimmt wird. Durch beispielsweise verschieden geformte Dorne können Hohlräume erzeugt werden. Auf diese Weise können prismatische Profile mit bis zu mehreren Metern Länge hergestellt werden. Anschließend kann das Profil auf die Länge des späteren Kurzschlussrings vom Strang abgesägt werden.

Stranggepresste teilkreisbogen-förmige Segmente können kostengünstig hergestellt werden. Unter anderem können auch elektrisch sehr gut leitfähige Metalle wie Kupfer oder Kupferlegierungen stranggepresst werden. Insbesondere, wenn die Segmente bei niedrigen Temperaturen, das heißt im Rahmen eines Kaltumformprozesses, und hohen Drücken stranggepresst worden sind, können sie eine sehr hohe mechanische Festigkeit aufweisen, die der Festigkeit von bei hohen Temperaturen gebildeten Kurzschlussringen, beispielsweise gegossenen Kurzschlussringen, in der Regel überlegen ist. Außerdem kommt es beim Strangpressen von Segmenten in der Regel nicht zu einem Verlust von beispielsweise teurem Kupfermaterial, wie er herkömmlich beispielsweise auftritt, wenn der Kurzschlussring aus mehreren gestanzten ringförmigen Blechen zusammengesetzt wird, wobei beim Stanzen unvermeidlich Stanzabfälle auftreten.

Alternativ zu beispielsweise mehreren Millimetern dicken stranggepressten Segmenten sind die Teilkreisbogen-förmigen Segmente erfindungsgemäß als dünne Bleche ausgebildet. Diese dünnen Bleche werden in die gewünschte Teilkreisbogen-Form gestanzt. Mehrere Teilkreisbogen-förmig gestanzte Bleche werden dann in Umfangsrichtung aneinandergesetzt und zu einem Kurzschlussring zusammengesetzt. Um dem Kurzschlussring in axialer Richtung die gewünschte Länge zu verschaffen, werden mehrere der dünnen Bleche hintereinander gestapelt. Die dabei in axialer Richtung in unterschiedlichen Ebenen angeordneten Bleche sind in Umfangsrichtung zueinander versetzt angeordnet.

Mit anderen Worten ist der gesamte Kurzschlussring einerseits aus mehreren in Umfangsrichtung aneinandergereihten Teilkreisbogen-förmigen Blechsegmenten, die insgesamt einen Ring bilden, und andererseits aus mehreren Schichten solcher Ringe zusammengesetzt. Indem die Teilkreisbogen-förmigen Blechsegmente der einzelnen Schichten in Umfangsrichtung zueinander versetzt angeordnet sind, lässt sich eine hohe mechanische Stabilität des gesamten Kurzschlussrings erzielen.

Vorteilhafterweise weisen alle den Kurzschlussring bildenden Teilkreisbogen-förmigen Segmente eine identische Geometrie auf. Beispielsweise kann der
gesamte Kurzschlussring aus mehreren identisch geformten stranggepressten Segmenten oder aus einer Vielzahl identisch ausgebildeter Blechsegmente zusammengesetzt sein. Dadurch kann einerseits die Fertigung der Segmente vereinfacht werden, da lediglich eine einzige Art von Segmenten hergestellt werden muss und hierfür entsprechend wenige Werkzeuge benötigt werden. Andererseits kann hierdurch auch die Lagerung und der Transport der Segmente sowie deren Verarbeitung vereinfacht werden, da die Segmente beispielsweise als Schüttgut gelagert und transportiert werden können. Dadurch, dass der Kurzschlussring nicht als gesamter einstückiger Ring bereitgestellt wird, sondern aus einer Vielzahl Teilkreisbogen-förmiger Segmente zusammengesetzt wird, kann außerdem der für die Lagerung und den Transport der Komponenten für den Kurzschlussring nötige Raumbedarf verringert werden.

Benachbarte Teilkreisbogen-förmige Segmente können miteinander mittels einer Nut-Feder-Verbindung verbunden sein. Bei einer solchen Nut-Feder-Verbindung sind an einem Segment an einer zu einem benachbarten Segment gerichteten Oberfläche ein als Feder bezeichneter abragender Bereich ausgebildet und an der entsprechenden Gegenfläche des benachbarten Segments eine als Nut bezeichnete Ausnehmung. Der abragende Bereich und die Ausnehmung sind dabei vorzugsweise komplementär zueinander ausgebildet, so dass sie vorzugsweise kraft- und formschlüssig ineinandergreifen können. Dadurch kann erreicht werden, dass benachbarte Segmente bereits beim anfänglichen Zusammensetzen des Kurzschlussrings einen ausreichenden mechanischen Halt miteinander erfahren. Der abragende Bereich und die Ausnehmung können dabei beliebige geeignete Geometrien aufweisen wie beispielsweise runde, eckige, schwalbenschwanzförmige oder ähnliche Formen.

Benachbarte Teilkreisbogen-förmige Segmente sind erfindungsgemäß stoffschlüssig miteinander verbunden. Eine solche stoffschlüssige Verbindung erhöht sowohl die mechanische Festigkeit des Kurzschlussrings als auch eine elektrische Leitfähigkeit entlang des Umfangs des Kurzschlussrings.

Insbesondere können benachbarte Teilkreisbogen-förmige Segmente miteinander verschweißt oder verlötet sein.

Ein Verschweißen benachbarter Segmente kann dabei mittels unterschiedlicher geeigneter Techniken wie Lichtbogenschweißen, Reibschweißen, Ultraschallschweißen, etc. erfolgen. Insbesondere Laserschweißen erscheint als vorteilhafte Technologie zum stoffschlüssigen Verbinden benachbarter Segmente, da hierbei auch komplexe Geometrien miteinander verschweißt werden können und ein Minimum an Werkzeugen zum Halten und Fügen der Segmente während des Verschweißens nötig ist. Ein weiterer Vorteil des Laserschweißens ist ein minimaler Wärmeeitrag.

Alternativ können die benachbarten Segmente auch miteinander verlötet werden, einzeln durch lokales Verlöten an den Grenzflächen zwischen benachbarten Segmenten oder in der Gesamtheit des aus den Segmenten zusammengesetzten Kurzschlussrings durch Eintauchen in ein Tauchlötbad.

Die Teilkreisbogen-förmigen Segmente können prinzipiell aus einem beliebigen elektrisch leitfähigen Material, insbesondere Metall, bestehen. Die Ausbildung des Kurzschlussrings aus mehreren Segmenten erscheint jedoch besonders vorteilhaft für den Fall, dass die Segmente aus Kupfer oder einer Kupferlegierung bestehen. Kupfer und dessen Legierungen weisen eine sehr hohe elektrische Leitfähigkeit auf und eignen sich daher besonders gut dazu, die im Kurzschlussring einer Asynchronmaschine auftretenden hohen elektrischen Ströme möglichst verlustarm zu leiten. Andererseits lässt sich Kupfer nur schwer zu großen Bauteilen, wie zum Beispiel einem einstückigen Kurzschlussring großen Durchmessers, verarbeiten. Insbesondere ein Gießen eines großen Bauteils aus Kupfer hat sich als problematisch herausgestellt. Durch das hier vorgeschlagene Zusammensetzen des Kurzschlussrings aus einer Vielzahl von Teilkreisbogen-förmigen Segmenten aus Kupfer oder einer Kupferlegierung können diese schwierig verarbeitbaren Materialien in einfacher Weise zu kleineren Bauteilen in Form der Segmente verarbeitet werden und andererseits trotzdem die vorteilhaften elektrischen Eigenschaften der Materialien genutzt werden.

Der zuvor beschriebene Kurzschlussring wird in einer elektrischen Asynchronmaschine verwendet, wobei die vorgeschlagene Segmentierung des Kurzschlussrings als besonders vorteilhaft bei
Asynchronmaschinen mit großem Rotordurchmesser erscheint, wie sie zur Erzeugung hoher Drehmomente beispielsweise in Kraft- oder Nutzfahrzeugen eingesetzt werden sollen.

Mögliche Merkmale und Vorteile von Ausführungsformen der Erfindung sind hierin teilweise in Bezug auf einen erfindungsgemäßen Kurzschlussring, teilweise in Bezug auf die Fertigung eines solchen Kurzschlussrings und teilweise in Bezug auf eine elektrische Asynchronmaschine mit einem solchen Kurzschlussring beschrieben. Ein Fachmann wird erkennen, dass die beschriebenen Merkmale in geeigneter Weise ausgetauscht oder miteinander kombiniert werden können, um zu weiteren Ausführungsformen und gegebenenfalls Synergieeffekten zu gelangen.

### Kurze Beschreibung der Zeichnungen

Nachfolgend werden Ausführungsformen der Erfindung unter Bezugnahme auf die beigefügten Zeichnungen beschrieben, wobei weder die Beschreibungen noch die Zeichnungen als die Erfindung einschränkend auszulegen sind.
Fig. 1 zeigt eine perspektivische Ansicht eines Rotors einer elektrischen Asynchronmaschine mit einem aus Segmenten zusammengesetzten Kurzschlussring gemäß einer nicht erfindungsgemäßen Ausführungsform der vorliegenden Erfindung.
Fig. 2 zeigt eine perspektivische Ansicht eines Teilkreisbogen-förmigen Segments für einen Kurzschlussring gemäß einer nicht erfindungsgemäßen Ausführungsform der vorliegenden Erfindung.
Fig. 3 zeigt eine perspektivische Ansicht eines Rotors für eine elektrische Asynchronmaschine mit einer Ausgestaltung eines Kurzschlussrings gemäß einer Ausführungsform der vorliegenden Erfindung.
Fig. 4 zeigt eine perspektivische Draufsicht auf den Rotor aus Fig. 3.

Die Figuren sind lediglich schematisch und nicht maßstabsgetreu. Gleiche Bezugszeichen bezeichnen in den Figuren gleiche oder gleichwirkende Komponenten.

### Ausführungsformen der Erfindung

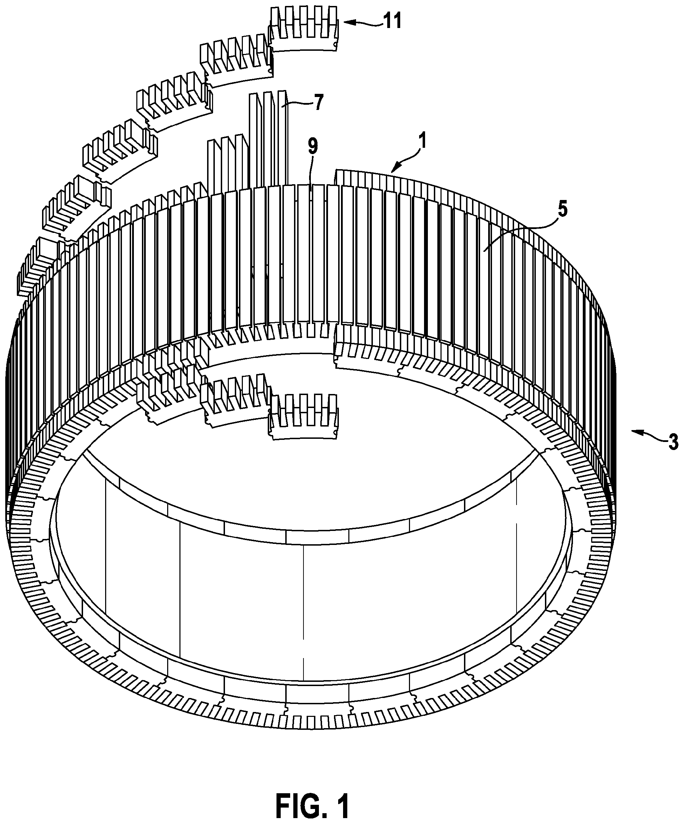

Fig. 1 zeigt einen Rotor 3 für eine elektrische Asynchronmaschine gemäß einer nicht erfindungsgemäßen Ausführungsform der vorliegenden Erfindung. Der Rotor 3 weist einen im Wesentlichen zylinderförmigen Rotorkörper 5 auf, an dessen Außenseite eine Vielzahl von in Längsrichtung verlaufenden Nuten 9 ausgebildet sind. Der Rotorkörper 5 selbst kann aus einem weichmagnetischen Material bestehen. An dem Rotorkörper 5 wird ein Kurzschlusskäfig angeordnet, der aus länglichen Stäben 7 sowie zwei Kurzschlussringen 1 besteht. Die länglichen Stäbe sind in die Nuten 9 des Rotorkörpers 5 eingelegt und ragen axial über diesen hinaus. An den beiden axialen Enden des Rotorkörpers 5 werden die beiden Kurzschlussringe 1 angeordnet. Die Kurzschlussringe 1 verfügen dabei ebenfalls über Ausnehmungen 13 in Form von Nuten, in denen die über den Rotorkörper 5 überragenden Enden der Stäbe 7 aufgenommen werden können. Die entlang des Umfangs beabstandet zueinander angeordneten und jeweils zueinander parallel verlaufenden Stäbe 7 werden dabei durch die Kurzschlussringe 1 sowohl mechanisch gehalten als auch elektrisch miteinander verbunden.

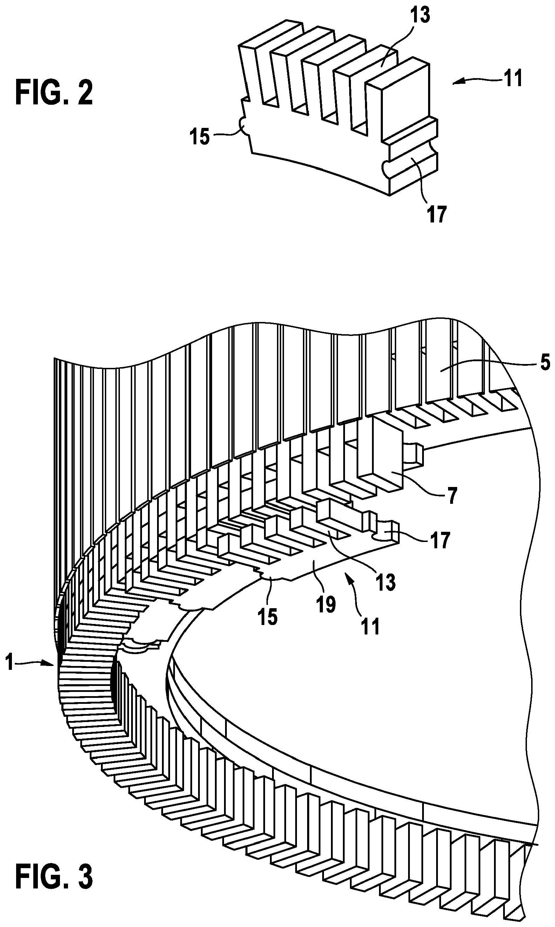

Bei Ausführungsformen der vorliegenden Erfindung sind die Kurzschlussringe 1 zunächst nicht einstückig ausgeführt, sondern setzen sich aus einer Mehrzahl von teilkreisförmigen Segmenten 11 zusammen. Ein solches teilkreisförmiges Segment 11 ist vergrößert in Fig. 2 dargestellt. Jedes der Segmente 11 weist an seiner zum Innern des Rotors und/oder an seiner zum Äußeren des Rotors 3 gerichteten Seite eine Teilzylinderbogen-förmige Oberfläche auf, so dass eine Vielzahl von in Umfangsrichtung nebeneinander angeordneten Teilkreisbogen-förmigen Segmenten 11 insgesamt einen Kurzschlussring mit einer kreisförmigen bzw. zylinderförmigen Geometrie bilden.

An der nach außen gerichteten Seite weisen die Segmente 11 ein oder mehrere Nuten-artige Ausnehmungen 13 auf, die im Querschnitt komplementär zu den aufzunehmenden Stäben 7 ausgebildet sind. Je nach beispielsweise zur Verfügung stehenden Fertigungsmöglichkeiten und zu erreichender Größe des gesamten Kurzschlussrings können die einzelnen Teilkreisbogen-förmigen Segmente 11 eine unterschiedliche Größe aufweisen und einen unterschiedlichen Winkelbereich des gesamten Kurzschlussrings bilden. Beispielsweise kann ein einzelnes Segment 11 lediglich eine einzige Ausnehmung 13 aufweisen oder mehrere, beispielsweise bis zu zwanzig, Ausnehmungen 13 aufweisen und dabei sich über einen Winkelbereich von beispielsweise lediglich einigen wenigen Grad oder bis zu beispielsweise 30° erstrecken.

An einer der in Umfangsrichtung weisenden Seitenflächen kann das Segment 11 einen abragenden Bereich, der als Feder 15 dienen kann, aufweisen, wohingegen an einer gegenüberliegenden Seitenfläche eine Ausnehmung angeordnet sein kann, die als Nut 17 dienen kann, so dass benachbarte Segmente 11 durch eine Nut-Feder-Verbindung miteinander verbunden werden können.

Alle Segmente 11 können vorzugsweise identisch ausgebildet sein, so dass sie leicht hergestellt, transportiert und gelagert werden können. Theoretisch können die Segmente als Schüttgut gelagert und transportiert werden.

Ein Bereich eines Jochs, das heißt unterhalb der Nuten, kann mit einer Kodierung versehen sein. Im Jochbereich kann eine positive und negative Kontur abgebildet sein, die das Fügen der Segmente zu einer Ronde erleichtern kann. Die Segmente 11 können hierbei für beide Seiten des Kurzschlusskäfigs verwendet werden.

Die Segmente 11 können beispielsweise im Strangpressverfahren hergestellt werden. Hierzu werden die Segmente in einer Matrize stranggepresst und anschließend auf die Länge des zu fertigenden Kurzschlussrings 1 vom Strang abgelängt. Ein Strangpressen der Segmente kann gegenüber einem Gießverfahren den Vorteil aufweisen, dass keine Endformschrägen und somit eine gerichtete Montage notwendig ist. Ein weiterer Vorteil besteht in einer möglichen Kaltverfestigung bei stranggepressten Profilen und einer dadurch vergrößerten Beanspruchbarkeit, die z.B. zur Erhöhung einer Drehzahlfestigkeit genutzt werden kann Eine Kontur eines Segments 11 kann dabei so ausgebildet sein, dass pro Segment ein oder mehrere Stäbe 7, je nach Durchmesser des Rotors 3, abgedeckt sind und ein Bereich des Jochs unter den Nuten mit einer Kodierung versehen ist.

Um den Kurzschlussring 1 zusammenzusetzen, werden die Segmente 11, nachdem die Stäbe 7 in die Nuten 9 des Rotorkörpers 5 eingefügt wurden, auf die überstehenden Enden der Stäbe 7 aufgesteckt. Dies wird wiederholt, bis eine geschlossene Ronde entstanden ist, die den Kurzschlussring 1 bildet. Anschließend werden die Segmente 11 beispielsweise an der Mantelfläche und/oder Stirnfläche mit den Stäben 7 stoffschlüssig verbunden. Auch benachbarte Segmente 11 werden an aneinandergrenzenden Flächen stoffschlüssig miteinander verbunden. Ein etwaig bestehender Spalt zwischen benachbarten Segmenten kann dabei geschlossen werden.

Das Verbinden benachbarter Segmente 11 bzw. das Verbinden eines Segments 11 mit in dessen Ausnehmungen 13 eingeführten Stäben 7 kann beispielsweise mittels eines Schweißprozesses erfolgen. Insbesondere kann eine Mantelfläche und/oder eine Stirnfläche eines Segments 11 mit den Stäben 7 sowie aneinandergrenzende Seitenflächen benachbarter Segmente 11 miteinander verschweißt werden. Vorteilhaft kann ein Laserschweißverfahren eingesetzt werden, mithilfe dessen auch komplexe Geometrien miteinander verschweißt werden können. Alternativ können die Komponenten auch miteinander verlötet werden, wobei entweder die Komponenten einzeln und partiell miteinander verlötet werden können oder ein Großteil oder vorzugsweise alle der Komponenten gemeinsam durch Eintauchen in ein Lötbad miteinander stoffschlüssig verbunden werden können.

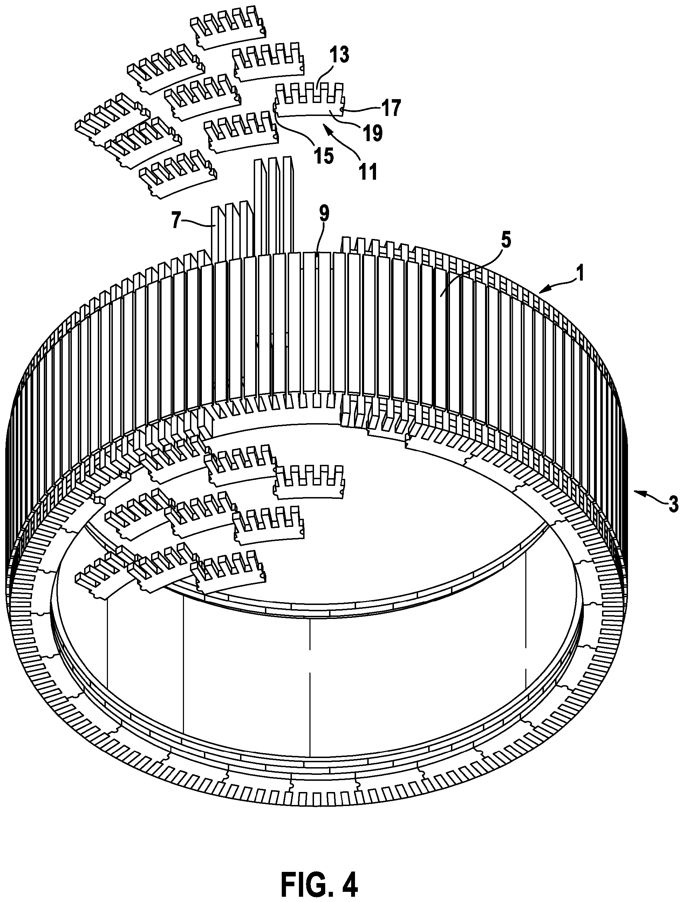

In den Fig. 3 und 4 ist eine Ausgestaltung eines erfindungsgemäßen Kurzschlussrings 1 dargestellt. In diesem Fall sind die Teilkreisbogen-förmigen Segmente 11 nicht als massive Bauteile mit einer Materialstärke von beispielsweise mehreren Millimetern bereitgestellt, wie sie in Fig. 2 dargestellt sind und wie sie im Strangpressverfahren hergestellt werden können. Stattdessen sind die Segmente 11 in Form dünner Bleche 19 bereitgestellt.

Jedes einzelne Blech kann dabei eine verhältnismäßig geringe Materialstärke von beispielsweise weniger als 5 mm, vorzugsweise weniger als 3mm, aufweisen. Die Bleche 19 können in eine geeignete Form gestanzt, insbesondere feingestanzt, werden. Um den gesamten Kurzschlussring 1 zu bilden und diesen mit einer Stärke, gemessen in Axialrichtung des Rotors 3, zu versehen, die eine ausreichende mechanische Festigkeit und ausreichende elektrische Leitfähigkeit ermöglicht, können in axialer Richtung des Kurzschlussrings 1 mehrere dieser dünnen Bleche 19 hintereinander gestapelt werden. Die in mehreren Schichten angeordneten dünnen Bleche 19 sind dabei in Umfangsrichtung versetzt zueinander angeordnet.

Sobald der gesamte Kurzschlussring 1 auf diese Weise aus mehreren Schichten zusammengesetzt ist, können die Bleche 19 der benachbarten Segmente 11 stoffschlüssig miteinander verbunden werden. Bei dieser mehrschichtigen Ausgestaltung des Kurzschlussrings 1 erscheint ein Verlöten der einzelnen Bleche 19 einfacher handhabbar als ein Verschweißen, insbesondere wenn ein Tauchlötbad eingesetzt wird. Dies hätte ferner den Vorteil, dass auch verschiedene Kupferlegierungen miteinander verbunden werden können, was beim Laserschweißen zu Problemen führen kann.

## Patentansprüche

1. Elektrische Asynchronmaschine mit einem Kurzschlussring (1), wobei der Kurzschlussring (1) kreisförmig ist und entlang des Umfangs des Kurzschlussrings (1) eine Vielzahl von sich in axialer Richtung erstreckenden Ausnehmungen (13) vorgesehen ist, in die Stäbe (7) eines Rotorkäfigs der Asynchronmaschine eingebracht werden können, wobei der Kurzschlussring aus mehreren Teilkreisbogen-förmigen Segmenten (11) zusammengesetzt ist, **dadurch gekennzeichnet, dass** die Teilkreisbogen-förmigen Segmente (11) an ihrem Umfang jeweils mehrere nutenartige Ausnehmungen (13) zur Aufnahme jeweils eines der Stäbe (7) aufweisen, dass die Teilkreisbogen-förmigen Segmente (11) als Bleche (19) ausgebildet sind, dass in axialer Richtung des Kurzschlussrings (1) mehrere Bleche (19) hintereinander gestapelt sind, dass in axialer Richtung in unterschiedlichen Ebenen angeordnete Bleche (19) in Umfangsrichtung zueinander versetzt angeordnet sind und dass benachbarte Teilkreisbogen-förmige Segmente (11) an aneinandergrenzenden Flächen stoffschlüssig miteinander verbunden sind.

2. Asynchronmaschine nach Anspruch 1 wobei alle den Kurzschlussring (1) bildenden Teilkreisbogen-förmigen Segmente (11) eine identische Geometrie aufweisen.

3. Asynchronmaschine nach einem der Ansprüche 1 bis 2, wobei benachbarte Teilkreisbogen-förmige Segmente (11) miteinander mittels einer Nut-Feder-Verbindung (15, 17) verbunden sind.

4. Asynchronmaschine nach einem der Ansprüche 1 bis 3, wobei benachbarte Teilkreisbogen-förmige Segmente (11) miteinander verschweißt oder verlötet sind.

5. Asynchronmaschine nach einem der Ansprüche 1 bis 4, wobei die Teilkreisbogen-förmigen Segmente (11) aus Kupfer oder einer Kupferlegierung bestehen.

## Claims

1. Electric asynchronous machine having a short-circuit ring (1), the short-circuit ring (1) being circular and a multiplicity of recesses (13) extending in the axial direction, into which rods (7) of a rotor cage of the asynchronous machine can be introduced, being provided along the circumference of the short-circuit ring (1), the short-circuit ring being composed of a plurality of partial ring segments (11), **characterized in that** the partial ring segments (11) each have on their circumference a plurality of groove-like recesses (13) to receive one each of the rods (7), **in that** the partial ring segments (11) are formed as metal plates (19), **in that** a plurality of metal plates (19) are stacked one after another in the axial direction of the short-circuit ring (1), **in that** metal plates (19) arranged in different planes in the axial direction are arranged to be offset relative to one another in the circumferential direction, and **in that** in adjacent partial ring segments (11) are integrally connected to one another at mutually adjoining surfaces.

2. Asynchronous machine according to Claim 1, wherein all the partial ring segments (11) that form the short-circuit ring (1) have an identical geometry.

3. Asynchronous machine according to either of Claims 1 and 2, wherein adjacent partial ring segments (11) are connected to one another by means of a tongue-and-groove connection (15, 17).

4. Asynchronous machine according to one of Claims 1 to 3, wherein adjacent partial ring segments (11) are welded or brazed to one another.

5. Asynchronous machine according to one of Claims 1 to 4, wherein the partial ring segments (11) consist of copper or a copper alloy.

## Revendications

1. Machine électrique asynchrone comportant un anneau de court-circuit (1), dans laquelle l'anneau de court-circuit (1) est circulaire et il est prévu, le long de la circonférence de l'anneau de court-circuit (1), une pluralité d'évidements (13) s'étendant dans la direction axiale, dans lesquelles peuvent être introduites des barres (7) d'une cage de rotor de la machine asynchrone, dans laquelle l'anneau de court-circuit est composé de plusieurs segments (11) en portions d'arc de cercle, **caractérisé en ce que** les segments (11) en portions d'arc de cercle présentent chacun plusieurs évidements (13) en forme de rainures sur leur circonférence pour recevoir respectivement l'une des barres (7), **en ce que** les segments (11) en forme de portions d'arc de cercle sont réalisés sous la forme de feuilles métalliques (19), **en ce que** plusieurs feuilles métalliques (19) sont empilées les unes derrière les autres dans la direction axiale de l'anneau de court-circuit (1), **en ce que** des feuilles métalliques (19) disposées dans différents plans dans la direction axiale sont décalées les unes par rapport aux autres dans la direction circonférentielle et **en ce que** des segments (11) en portions d'arc de cercle adjacents sont reliés les uns aux autres par complémentarité de matériau au niveau de surfaces mutuellement adjacentes.

2. Machine asynchrone selon la revendication 1, dans laquelle tous les segments (11) en portions d'arc de cercle formant l'anneau de court-circuit (1) présentent une géométrie identique.

3. Machine asynchrone selon l'une quelconque des revendications 1 à 2, dans laquelle des segments (11) en portions d'arc de cercle adjacents sont reliés entre eux par une liaison à rainure et ressort (15, 17).

4. Machine asynchrone selon l'une quelconque des revendications 1 à 3, dans laquelle des segments (11) en portions d'arc de cercle adjacents sont soudés ou brasés les uns aux autres.

5. Machine asynchrone selon l'une quelconque des revendications 1 à 4, dans laquelle les segments (11) en portions d'arc de cercle sont constitués de cuivre ou d'un alliage de cuivre.
